# EUROPÄISCHE PATENTSCHRIFT

(11) **EP 0 644 805 B1**
(45) Veröffentlichungstag und Bekanntmachung des Hinweises auf die Patenterteilung: **29.01.1997**
(21) Anmeldenummer: 93912558.9
(22) Anmeldetag: 01.06.1993
(51) Int. Cl.: B21J 9/18, B30B 1/26, F16H 21/30

(54) **AUTOMATISCHE UMFORMMASCHINE**
AUTOMATIC FORMING MACHINE
MACHINE-OUTIL AUTOMATIQUE TRAVAILLANT PAR FORMAGE

(30) Priorität: 10.06.1992 DE 4218955; 10.11.1992 DE 4237898
(43) Veröffentlichungstag der Anmeldung: 29.03.1995
(73) Patentinhaber: Eumuco Hasenclever GmbH, 51377 Leverkusen (DE)
(72) Erfinder: ENDTER, Horst, D-4018 Langenfeld (DE)
(74) Vertreter: Pollmeier, Felix, Dipl.-Ing.
(86) Internationale Anmeldenummer: DE9300480
(87) Internationale Veröffentlichungsnummer: WO9325330

(56) Entgegenhaltungen:
- CH-A- 303 354
- DE-B- 2 061 043
- FR-A- 914 211
- US-A- 3 508 451
- US-A- 3 848 472
- US-A- 4 697 466

## Beschreibung

Die Erfindung betrifft eine automatische Umformmaschine, insbesondere Exzenter- oder Kurbelpresse, zum Warmschmieden von schrittweise durch einen Schmiedebereich geförderten Werkstücken, mit einer angetriebenen Exzenterwelle, auf der eine mit dem auf- und abbeweglichen Werkzeugschlitten verbundene Pleuelstange gelagert und der ein ein stationäres, innenverzahntes, mit einem Planetenritzel kämmendes Hohlrad aufweisender Ungleichförmigkeitsantrieb zugeordnet ist.

Eine Exzenterpresse dieser Art ist durch die US-A-3 848 472 bekanntgeworden. Der Ungleichförmigkeitsantrieb dieser Exzenterpresse ermöglicht es zwar, eine Hub-Ruhelage des Werkzeugschlittens im oberen Umkehrpunkt auszubilden und damit eine zum Durchlaufbetrieb mit Hubautomatik geeignete Presse zu schaffen. Denn es läßt sich ein in der Höhenlage stillstehender Stößel erreichen, so daß mehr Zeit für die Hubbalkenautomatik und die sonst noch zu verrichtenden Nebentätigkeiten (Handling) zur Verfügung steht. Jedoch ist ein für den Betrieb einer Exzenterschmiede- oder Kurbelpresse zwingend erforderlicher Kraftaufbau nicht möglich. Durch die notwendigen Größen der beiden Exzenter stellen sich nämlich so eingeengte Platzverhältnisse ein, daß das Ritzel in Abhängigkeit von den Konstruktionsradien der beiden Exzenterkurven entsprechend klein ausgelegt werden müßte. Damit einhergehend lassen sich entsprechend auch die Zähne des Ritzels nur klein und folglich mit nur geringer Festigkeit auslegen. Die benötigte Kraftübertragung läßt sich somit nicht erzielen.

Der Erfindung liegt daher die Aufgabe zugrunde, eine automatische Umformmaschine, insbesondere Exzenterschmiede- oder Kurbelpresse, der eingangs genannten Art zu schaffen, die ohne die genannten Nachteile einen Durchlaufbetrieb auch beim Warmschmieden erlaubt.

Diese Aufgabe wird erfindungsgemäß dadurch gelöst, daß der Ungleichförmigkeitsantrieb mit einem Umlaufrädergetriebe ausgebildet ist, bei dem das Planetenritzel über ein Zwischenrad getrieblich mit einem auf der Exzenterwelle gelagerten Ritzel verbunden ist. Der Werkzeugschlitten legt damit im oberen Umkehrpunkt keinen Hubweg mehr zurück, während im Bereich des unteren Umkehrpunktes eine hohe Geschwindigkeit erreicht wird. Ein Kuppeln und Bremsen bei jedem Pressenhub kann entfallen; dies ist vielmehr noch beim Ein- bzw. Ausschalten der Schmiedepresse erforderlich.

Eine bevorzugte Ausgestaltung der Erfindung sieht vor, daß die Drehzahl der Exzenterwelle dreimal so hoch ist wie die Hubzahl des Werkzeugschlittens. Damit ergibt sich im Vergleich zu einer herkömmlichen Schmiedepresse bei halb so hoher Hubzahl des Werkzeugschlittens eine gleich kurze Gesenkberührzeit. Der Kurvenverlauf entspricht der einer Hypozykloide in Form eines Dreiecks. Die Dreieckskurve läßt sich in dem Verhältnis der Exzenter zueinander variieren, dergestalt, daß in bevorzugter Weise der Werkzeugschlitten im unteren Umkehrpunkt die höchste Geschwindigkeit besitzt. Umso spitzer die Dreickskurve nach unten zuläuft, desto höher ist die Umformgechwindigkeit.

Weitere Merkmale und Vorteile der Erfindung ergeben sich aus den Ansprüchen und der nahfolgenden Beschreibung, in der einige Ausführungsbeispiele des Gegenstandes der Erfindung anhand einer Exzenterpresse näher erläutert sind.

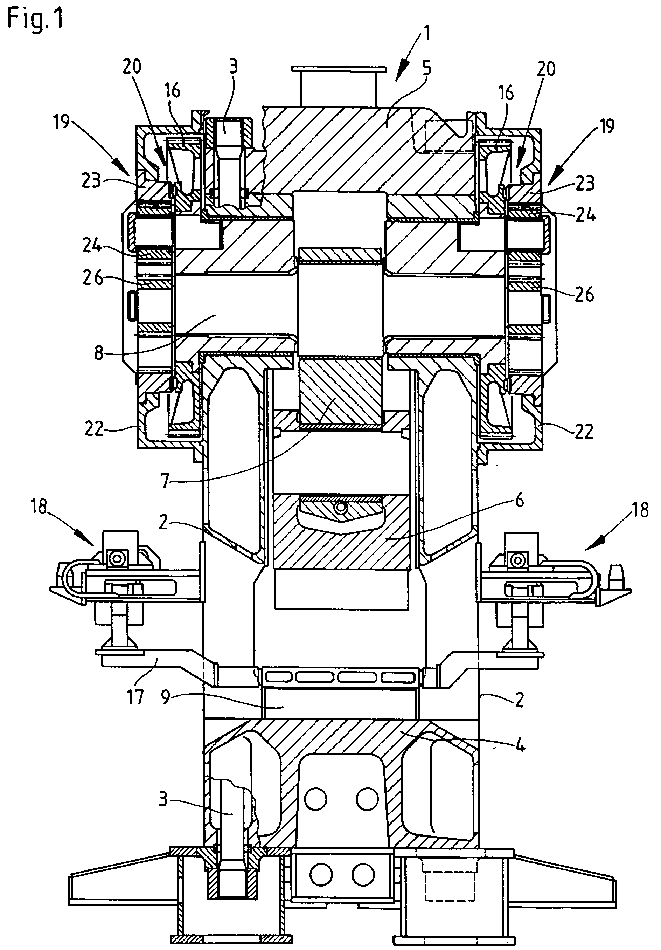

- Figur 1: eine einen erfindungsgemäßen Ungleichförmigkeitsantrieb aufweisende Exzenterschmiedepresse, im Längsschnitt und ohne Hauptantrieb dargestellt;
- Figur 2: als Einzelheit das Querhaupt der Presse gemäß Figur 1, im Teilschnitt dargestellt;
- Figur 3: die Seitenansicht des Querhauptes gemäß Figur 2; und
- Figuren 4a bis 4d: Sinnbilddarstellungen des Ungleichförmigkeitsantriebs gemäß Figur 1, der aus einem ein innenverzahntes Hohlrad aufweisenden Umlaufrädergetriebe besteht, einer damit erreichten Dreieckskurve des Bewegungsablaufes sowie eines Weg-Zeit-Diagramms.

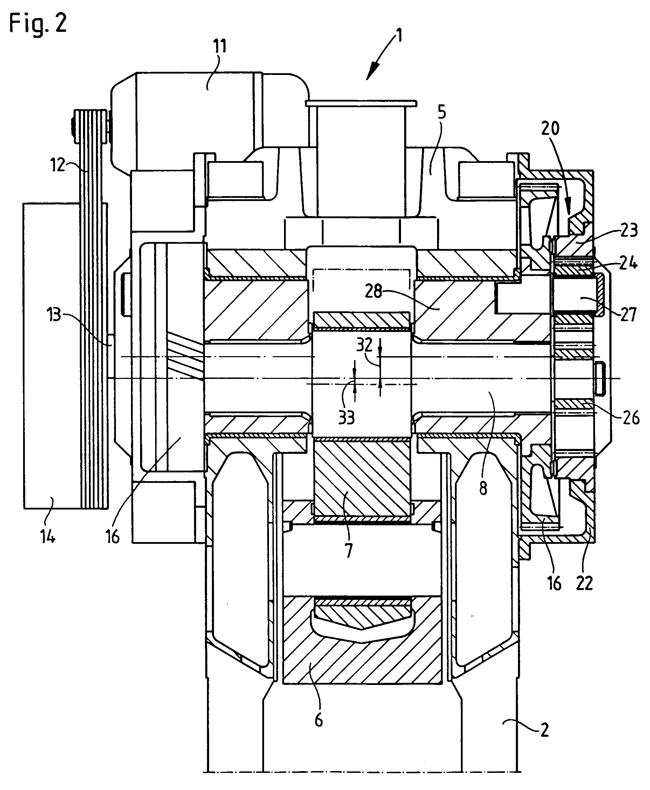

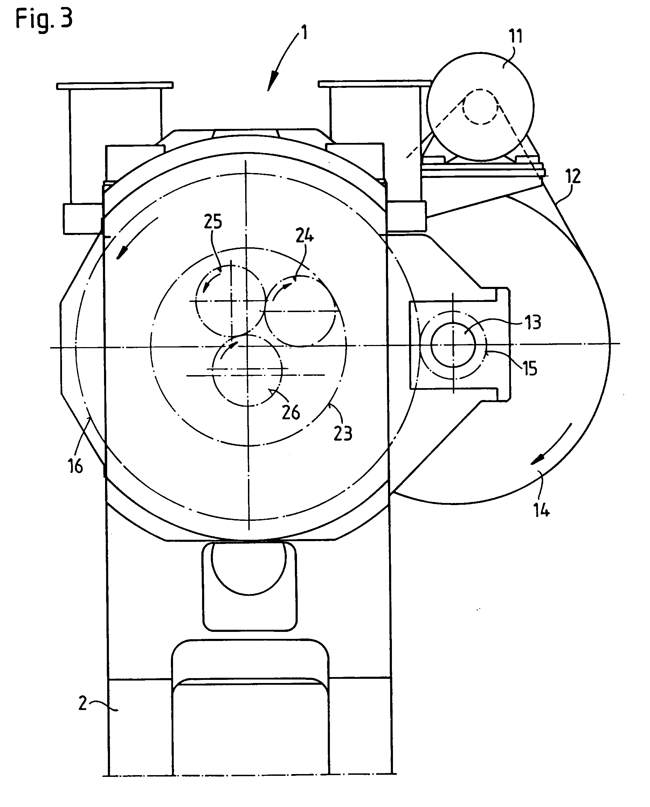

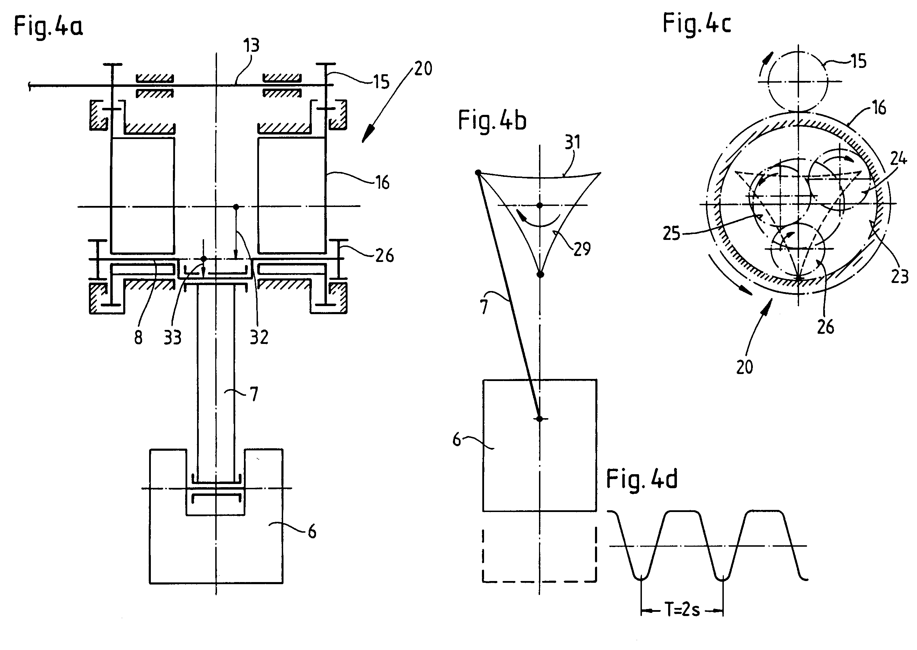

Eine Exzenterpresse 1 weist ein Pressengestell 2 auf, das als Rahmenkonstruktion ausgeführt ist. Vier Zuganker 3 schrumpfen den Pressentisch 4, die beiden Seitenständer und die Quertraverse 5 zu einem geschlossenen Rahmen zusammen. Der Werkzeugschlitten 6 wird in bekannter Weise über eine Pleuelstange 7 durch eine angetriebene Exzenterwelle 8 auf- und abbewegt, wobei der Werkzeugschlitten 6 mit einem Untergesenk 9 zusammenarbeitet. Ein Elektromotor 11 treibt über Keilriemen 12 ein auf einer Vorgelegewelle 13 angeordnetes Schwungrad 14 an, und über ein Vorgelegeritzel 15 wird die Antriebsleistung auf ein an beiden Seiten auf der Hauptachse gelagertes, großes Zahnrad 16 übertragen (vgl. die Figuren 2 und 3). Für den selbsttätigen, schrittweisen Werkstücktransport dienen Hubbalken 17 einer Hubbalkenautomatik 18, wobei die Hubbalken seitlich und in der Höhe des Untergesenks 9 verlaufen. Um einen Gleichlauf zu erzielen und beim Warmschmieden die Werkstücke bzw. Schmiedeteile im Durchlaufbetrieb der Exzenterpresse 1 mittels der Hubbalken 17 von einem Gesenk zum anderen zu transportieren, ist die Exzenterwelle 8 an ihren beiden Enden mit den gleichen Ungleichförmigkeitsantrieben 19 versehen, die als Umlaufrädergetriebe 20 (vgl. die Figuren 4a und 4c) ausgebildet sind.

Wie sich im einzelnen aus den Figuren 2 und 3 sowie 4c ergibt, besteht das Umlaufrädergetriebe 20 aus einem über eine Gebhäusekappe 22 fest mit dem Pressengestell 2 verbundenen innenverzahnten Hohlrad 23. In dem Hohlrad 23 ist ein mit dessen Verzahnung kämmendes Planetenritzel 24 angeordnet, das über ein Zwischenrad 25 getrieblich mit einem auf der Exzenterwelle 8 gelagerten Ritzel 26 verbunden ist. Sowohl das Planetenritzel 24 als auch das Zwischenrad 25 ist auf einer Tragachse 27 befestigt; die Tragachsen 27 sind in einer Exzenterbüchse 28 angeordnet, auf der außerdem das große Zahnrad 16 lagert.

Im Betrieb der Exzenterpresse 1 gibt der Elektromotor 11 seine Antriebsleistung über die Keilriemen 12, das Schwungrad 14 und das Vorgelegeritzel 15 auf das große Zahnrad 16 ab, so daß der Exzenterbüchse 28 und damit der Exzenterwelle 8 eine Drehbewegung auferlegt wird, die sich über die Pleuelstange 7 in eine Auf- und Abbewegung des Werkzeugschlittens 6 umwandelt. Aufgrund des mit dem Umlaufrädergetriebe 20 erreichten Übersetzungsverhältnisses dreht sich die Exzenterwelle 8 dreimal so schnell wie die Exzenterbüchse 28, und es stellt sich eine wie in Figur 4b dargestellte dreieckige Bewegungsablaufkurve 29 ein, deren Spitze nach unten, zum unteren Umkehrpunkt weist. Die erreichte dreieckige Bewegungsablaufkurve 29 bewirkt im oberen Umkehrpunkt gemäß der im wesentlichen horizontalen Basiskante 31 der Dreieckskurve eine Hub-Ruhelage, während der sich der Werkzeugschlitten 6 über längere Zeit nicht bewegt, obwohl sich die Exzenterwelle 8 weiterdreht, und bei nur halber Drehzahl des Hauptantriebes (Motor 11, Schwungrad 14, Vorgelegeritzel 15 und großes Zahnrad 16) eine im unteren Umkehrpunkt gleich hohe Umformgeschwindigkeit, wie sie ansonsten beim Kaltschmieden bei einer im Durchlaufbetrieb arbeitenden vollautomatischen Exzenterschmiedepresse vorliegt (vgl. auch das Diagramm gemäß Figur 4d).

Die Dreiecksform der Bewegungsablaufkurve 29 läßt sich in dem Verhältnis des großen Exzenters 32 zu dem kleinen Exzenter 33 variieren, wobei sich eine umso höhere Umformgeschwindigkeit ergibt, je spitzer die Dreieckskurve nach unten zuläuft. Da die Exzenterpresse 1 somit auch beim Warmschmieden im Durchlaufbetrieb arbeiten kann, wird die nicht dargestellte Kupplungs- und Bremseinheit, die auf der Vorgelegewelle 13 angeordnet ist, lediglich beim Ein- und Ausschalten der Exzenterpresse 1 benötigt, wodurch sich ein ruhiger Lauf erreichen und Schaltgeräusche vermeiden lassen; entsprechend werden der Verschleiß sowie der Energieverbrauch an der Kupplungs- und Bremseinheit verringert.

## Patentansprüche

1. Automatische Umformmaschine, insbesondere Exzenter- oder Kurbelpresse, zum Warmschmieden von schrittweise durch einen Schmiedebereich geförderten Werkstücken, mit einer angetriebenen Exzenterwelle (8), auf der eine mit dem aufund abbeweglichen Werkzeugschlitten (6) verbundene Pleuelstange (6) gelagert und der ein ein stationäres, innenverzahntes, mit einem Planetenritzel (24) kämmendes Hohlrad (23) aufweisender Ungleichförmigkeitsantrieb (19) zugeordnet ist,
**dadurch gekennnzeichnet**,
daß der Ungleichförmigkeitsantrieb (19) mit einem Umlaufrädergetriebe (20) ausgebildet ist, bei dem das Planetenritzel (24) über ein Zwischenrad (25) getrieblich mit einem auf der Exzenterwelle (8) gelagerten Ritzel (26) verbunden ist.

2. Umformmaschine nach Anspruch 1,
**dadurch gekennzeichnet**,
daß die Drehzahl der Exzenterwelle (8) dreimal so hoch ist wie die Hubzahl des Werkzeugschlittens (6).

## Claims

1. Automatic forming machine, in particular eccentric or crank press, for hot forging workpieces which are conveyed stepwise through a forging region, having a driven eccentric shaft (8) on which there is mounted a connecting rod (6) [sic] connected to the tool carriage (6), which can be moved up and down, and with which eccentric shaft (8) there is associated an irregular drive (19) having a stationary, internally toothed hollow gear (23) meshing with a planet pinion gear (24), characterized in that the irregular drive (19) is constructed with a planet gear system (20) in which the planet pinion gear (24) is in geared connection by way of an intermediate gear (25) with a pinion (26) mounted on the eccentric shaft (8).

2. Forming machine according to Claim 1, characterized in that the speed of the eccentric shaft (8) is three times as high as the stroke rate of the tool carriage (6).

## Revendications

1. Machine de formage automatique, en particulier presse à excentrique ou presse à bielle, pour le forgeage à chaud de pièces à oeuvrer convoyées pas à pas à travers une région de forgeage, comprenant un arbre à excentrique entraîné (8) sur lequel est montée une tige de bielle (6) reliée au chariot à outil (6) mobile en montant et en descendant, et auquel est associé un entraînement de formage inégal (19) qui comporte une roue creuse (28) stationnaire et dentée à l'intérieur, qui engrène avec un pignon satellite (24),
caractérisée en ce que l'entraînement de formage inégal (19) est réalisé par un entraînement à roues périphériques (20), dans lequel le pignon satellite (24) est relié en entraînement, via une roue intermédiaire (25), avec un pignon (25) monté sur l'arbre à excentrique (8).

2. Machine de formage selon la revendication 1, caractérisée en ce que la vitesse de rotation de l'arbre à excentrique (8) est trois fois plus élevée que la cadence de course du chariot à outil (6).
